# EUROPEAN PATENT APPLICATION

(11) **EP 1 513 037 A1**
(43) Date of publication of application: **09.03.2005**
(21) Application number: 03077781.7
(22) Date of filing: 03.09.2003
(51) Int. Cl.: G05B 19/418

(54) **Method and means for manufacturing products**

(71) Applicant: Nederlandse Organisatie voor Toegepast-Natuurwetenschappelijk Onderzoek TNO, 2628 VK Delft (NL)
(72) Inventor: Puik,Erik Christian Nicolaas, 5624 NR Eindhoven (NL); Tillie, Lucas Willem Mathieu, 5611 SG Eindhoven (NL)
(74) Representative: Prins, Adrianus Willem, Mr. Ir.

(57) **Abstract**

System (1) for manufacturing one or more products, comprising two or more process units (3) which are suspected to be subject to disturb one another, either a process unit (3c) which is suspected to be subject to disturb one or more of the remaining process units or a process unit (3f) which is suspected to be subject to be disturbed by one or more of the remaining process units comprising means for causing an interruption or modification of the operation of the relevant remaining processes during a state of such potential mutual disturbance. To enable this a code to the relevant process units may be transmitted, including a request to interrupt or modify their operation during the state of potential mutual disturbance.

## Description

### FIELD OF THE INVENTION

The present invention relates to a method and means for manufacturing one or more products, including the operation of processes or process units, control means and software.

### BACKGROUND OF THE INVENTION

When the manufacturing of a product or a series of products is performed by means of two or more processes or process units, a problem may arise when two or more of such processes or units are -or are suspected to be- subject to disturb each other's proper operation. For instance, such mutual disturbance may include mechanical vibrations, electromagnetic radiation, heat or moisture emission, etc. Such disturbances may cause improper performances of the involved process or processes.

When several processes or process units are involved and those processes or units are co-operating by means of e.g. control hardware and/or software, the designer of the manufacturing process could -manually- program the process thus that mutual disturbances are taken into account, e.g. by timing the several processes thus that those ones which may be sensitive for mutual negative influences, will not perform at the same time. A disadvantage of this way of doing is that the design freedom of the manufacturing process reduces. Moreover, it is requested that the process designer has a good knowledge of the effects of the various processes or process units one another. Such knowledge, however, is often not or only poorly documented.

Aim of the present invention is to present a method and means having advanced and more flexible capabilities.

### SUMMARY OF THE INVENTION

The present invention provides a manufacturing method wherein either a process which is or which is suspected to be subject to disturb one or more of the remaining processes, or -inversely- a process which is or which is suspected to be subject to be disturbed by one or more of the remaining processes, causes an interruption or a proper modification of the operation of the relevant remaining processes during a state of such potential disturbance.

An important aspect of the invention is that the relevant process interruption or modification is initiated and/or originated locally, viz. by the relevant local process itself, viz. the (potentially) disturbing process, threatening one or more of the other processes or -inversely- the process which may be threatened by (potentially) disturbances of one or more of the other processes.

Preferably, the process which is or which is suspected to be subject to disturb or inversely, to be disturbed by one or more of the remaining processes, initiates or originates the transmission of a code to the relevant remaining process or processes, which includes a request to interrupt or modify the operation of the relevant remaining process or processes during the state of that (potential) disturbance.

For the operation of the above method, the invention also provides a system for manufacturing one or more products, comprising two or more process units which are or which are suspected to be subject to disturb one another, either a process unit which is or which is suspected to be subject to disturb one or more of the remaining process units or a process unit which is or which is suspected to be subject to be disturbed by one or more of the remaining process units, comprising means for causing an interruption or a proper, counteracting modification of the operation of the relevant remaining processes during such potential disturbance.

Preferably, the relevant process unit which is or which is suspected to be subject to disturb or inversely, to be subject to be disturbed by one or more of the remaining process units, comprises means for initiating the transmission of a code to the relevant process units, including a request to interrupt or modify the operation of the relevant remaining process or processes during the state of that potential disturbance.

Process units, fit for a system according to the invention, may comprise means for initiating the transmission of a code to the relevant remaining process units, which includes a request to interrupt or modify the operation of the relevant remaining process units during the state of imminent disturbance. Moreover, process units, fit for the inventive system, may comprise means for receiving and proper processing a code, initiated by one or more of said remaining process units, comprising a request to interrupt or modify the process unit's operation during a state of potential mutual disturbance.

Below the invention will be discussed further with help of an exemplary embodiment of the inventive system.

### FIGURES

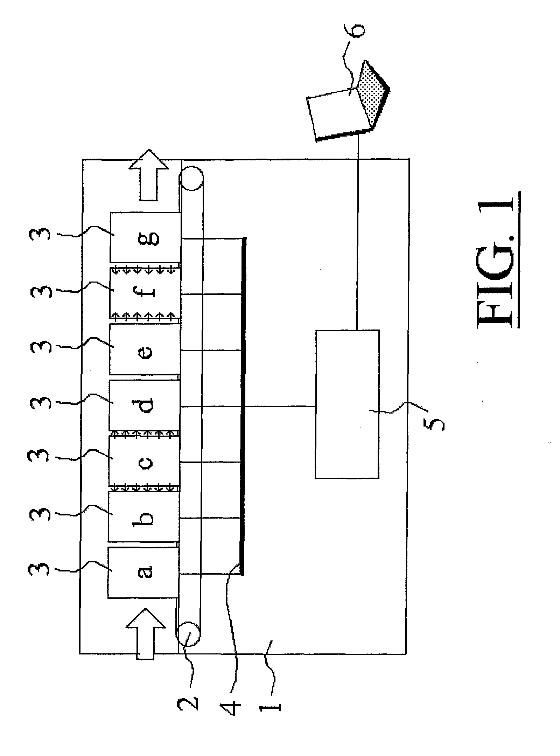

Figure 1 shows an exemplary embodiment of a manufacturing system.

### EXEMPLARY EMBODIMENTS

Figure 1 shows a system 1 for manufacturing products (not shown) which may be transported, by transport means 2, along a number of processing or process units 3(a...g). Such units 3 e.g. may include a mechanical machining unit, a soldering unit, an RF heating unit, etc. Those process units 3 are under control, via a control bus 4, of a manufacturing control unit 5, which is accessible by means of a terminal or computer system 6.

The process units 3 are fit to exchange control codes with the control unit 5 and/or one another during the manufacturing cycle. The control codes exchanged may be part of a manufacturing system code or command set which comprises all request codes, command codes, status codes etc. applicable for proper operation of all. When a product "under construction" is supplied to unit 3a, that unit may report the arrival of the product by means of a status code sent to the control unit 5 and/or a "REQUEST-TO-START" code. On arrival of a start command code from unit 5, unit 3a will start its processing cycle. After having completed its processing cycle unit 3a may send a "PROCESS READY" status code to the control unit 5, after which control unit 5 commands the transport means 2 to transport the product under construction to the next process unit 3b. On arrival, unit 3b may send a "READY TO START" status code to unit 5, after which unit 5 commands unit 3b to start its process duty. And so on.

When a product is being processed by e.g. process unit 3b, in the same time next product may be processed by or in unit 3a. So, at one and the same moment each unit 3 may be processing one occurrence of the product, in different stages of manufacturing.

Suppose that one of the process units 3, say unit 3c, may excite, during a certain state of its process duty cycle mechanical vibrations, electromagnetic radiation or heat which is or at least which is suspected to disturb one or more of the remaining process units 3. According to the invention means are provided for causing an interruption or at least a proper (temporary) adaptive modification of the operation (e.g. causing less vibration -e.g. by temporarily "slowing-down" the relevant unit's operation speed-, heat dissipation, radiation etc.), of the relevant remaining processes during a state of such potential mutual disturbance. Such an action for interruption or modification of the remaining processes' operation may be implemented by having the relevant unit, in this case unit 3c, transmits a status code "GENERAL DANGER ALARM FOR ALL UNITS" or "DANGER FOR MECHANICAL VIBRATIONS", "DANGER FOR ELECTROMAGNETIC RADIATION" or "DANGER FOR HEAT" etc. to the control means 5 ("master-slave") or directly ("peer-to-peer") to the remaining units 3. If sent to unit 5, the control program of unit 5 may broadcast an interrupt or modification command to either all units (except the disturbing unit 3c) or transmit an interrupt/modification command to the relevant sensitive units, viz. susceptible to mechanical disturbances (vibrations) or susceptible to e.g. electromagnetic radiation or heat. When broadcasted to all remaining units 3 -either via control unit 5 or directly- all those units 3 may stop or modify -e.g. temporarily slowing down- there operation or only the units which are susceptible to the relevant specific disturbance (e.g. vibrations). The control program of each individual processing unit 3 needs to include a (continuous) subroutine like "ON RECEPTION OF A (GENERAL OR SPECIFIC) 'DANGER' CODE INTERRUPT NORMAL OPERATION UNTIL RECEPTION OF AN 'END OF DANGER' CODE". After unit 3c ends its disturbing sub-process or duty, it may transmit an "END OF DANGER" status code to either control unit 5 or directly to each process unit 3, via the bus 4, on reception of which the units 3 may continue there interrupted or adapted operation.

Suppose that one of the units 3, say unit 3f, e.g. during operation of a specific sub-process or duty, may be very susceptible for external influences which may disturb that specific sub-process or duty, unit 3f may transmit a status code "INTERRUPT ALL UNITS" or "INTERRUPT MECHANICAL UNITS", "INTERRUPT ELECTROMAGNETIC RADIATING UNITS" or "INTERRUPT HEAT RADIATING UNITS" etc. to the control means 5 or directly to the remaining units 3. If sent to unit 5, the control program of unit 5 may broadcast an interrupt command to either all units (except susceptible unit 3f) or transmit an interrupt command to the potentially "dangerous" units, viz. potentially originating mechanical disturbances (vibrations), electromagnetic radiation or heat etc. When broadcasted to all remaining units 3 -either via control unit 5 or directly- all those units 3 may stop there operation or only the units which are potential sources of a specific disturbance. The control program of each individual processing unit 3 needs to include a (continuous) subroutine like "ON RECEPTION OF A (GENERAL OR SPECIFIC) 'INTERRUPT' CODE INTERRUPT NORMAL OPERATION UNTIL RECEPTION OF AN 'END OF INTERRUPTION' CODE". After unit 3f ends its sensible sub-process or duty, it may transmit an "END OF INTERRUPTION" status code to either control unit 5 or directly to each process unit 3, via the bus 4, on reception of which the units 3 may continue there operation.

It is noted that in both above cases the same status or request code may be transmitted, viz. a code having the format "SILENCE TO <ALL UNIT CATEGORIES/SPECIFIC UNIT CATEGORY>". In the case a process unit (e.g. 3c, see above) is or is suspected to be subject to disturb one or more of the remaining process units, the code requesting to interrupt their threatened operation during the state of potential disturbance, might have the format "SILENCE TO <ALL UNIT CATEGORIES/SPECIFIC UNIT CATEGORY>", while also in the case a process unit (e.g. 3f, see above) is or which is suspected to be subject to be disturbed by one or more of the remaining process units, the request code to interrupt their threatening operation during the state of potential disturbance might have the same format "SILENCE TO <ALL UNIT CATEGORIES/SPECIFIC UNIT CATEGORY>" too. In both cases the units' interrupted or adapted operations may be continued after reception -from either the relevant unit 3 or control unit 5- of a code "CONTINUE OPERATION".

Process units 3, fit for being part of the system 1, thus may comprise means for initiating the transmission of a code to the relevant process units, including a request to interrupt their operation during the state of potential mutual disturbance to and/or from co-operating units 3. The code may have a format like "SILENCE TO <ALL UNIT CATEGORIES/SPECIFIC UNIT CATEGORY>" and may be followed by a code having a format like "CONTINUE OPERATION". The semantics of the command syntax "SILENCE TO <ALL UNIT CATEGORIES/SPECIFIC UNIT CATEGORY>" is: "Interrupt operation if content of the additional parameter field (<...>) is "ALL UNIT CATEGORIES" or if the "SPECIFIC UNIT CATEGORY" in the parameter field meets the unit's unit category (e.g. mechanical/electromagnetic/heat/ etc.). On the other side, process units 3, fit for being part of the system 1, may comprise means for receiving and processing codes initiated by one or more of the remaining process units, including a request to interrupt the process unit's operation during a state of potential mutual disturbance, viz. codes having a format like "SILENCE TO <ALL UNIT CATEGORIES/SPECIFIC UNIT CATEGORY>", in due time to be followed by a reset code e.g. having a format like "CONTINUE OPERATION".

As stated above, the "SILENCE" or "INTERRUPT" commands may either cause an interruption of the normal operation of the relevant units or modify/adapt their operation (which also may be seen as an interruption of their *normal* operation), both fit for counteracting the relevant disturbing influences like vibrations, heat etc.

The control means of the manufacturing system may or may not comprise separate control means, like control unit 5. Known in the art is to apply optionally, instead of a "master-slave" configuration using a control unit 5 ("master") which controls the production units 3 ("slaves"), a "peer-to-peer" configuration, in which -without use of any central control unit- the relevant control software is distributed over the several units 3, which communicate with each other via control bus 4.

For completeness, some remarks about the software to be used. The software which is fit for controlling the process units 3 may comprise a software module or routine which is enabled for generating and outputting a "SILENCE"-code whenever the relevant process unit becomes in a state of which it either may disturb other process units or may be disturbed by other process units. On exactly what conditions that state will reached, may be set by the process unit's manufacturer and/or e.g. the designer of the manufacturing system 1, e.g. keeping the actual arrangement of the processing units 3 in mind. Complementarily, the software may include a module or routine which is enabled to generate and output a second code of e.g. the format "CONTINUE OPERATION" as soon of the process unit becomes out of said state of which either it disturbs or is disturbed by other process units.

Finally, the software for controlling the process units 3 has to be fit for receiving said "SILENCE"-code and for stopping the process unit's operation on reception of it, and, moreover, for receiving a second, "CONTINUE OPERATION" code and for continuing the process unit's operation on the second code's reception.

## Claims

1. Method for manufacturing one or more products, comprising operation of two or more processes which are or are suspected to be subject to mutual disturbance, the method comprising that either a process which is or which is suspected to be subject to disturb one or more of the remaining processes, or a process which is or which is suspected to be subject to be disturbed by one or more of the remaining processes, causes an interruption or modification of the operation of the relevant remaining processes during a state of such potential disturbance.

2. Method according to claim 1, in which the relevant process which is or which is suspected to be subject to disturb one or more of the remaining processes, initiates the transmission of a code to the relevant processes, including a request to interrupt or modify their operation during the state of potential disturbance.

3. Method according to claim 1, in which the relevant process which is or which is suspected to be subject to be disturbed by one or more of the remaining processes, initiates the transmission of a code to the relevant processes, including a request to interrupt or modify their operation during the state of potential disturbance.

4. System (1) for manufacturing one or more products, comprising two or more process units (3) which are or which are suspected to be subject to disturb one another, either a process unit (3c) which is or which is suspected to be subject to disturb one or more of the remaining process units, or a process unit (3f) which is or which is suspected to be subject to be disturbed by one or more of the remaining process units, comprising means for causing an interruption or modification of the operation of the relevant remaining processes during a state of such potential mutual disturbance.

5. System according to claim 4, the relevant process unit (3c) which is or which is suspected to be subject to disturb one or more of the remaining process units comprising means for initiating the transmission of a code to the relevant process units, including a request to interrupt or modify their operation during the state of potential mutual disturbance.

6. System according to claim 4, the relevant process unit (3f) which is or which is suspected to be subject to be disturbed by one or more of the remaining process units comprising means for initiating the transmission of a code to the relevant process units, including a request to interrupt or modify their operation during the state of potential mutual disturbance.

7. Process unit (3), fit for being part of a system according to claim 4, comprising means for initiating the transmission of a code to the relevant process units, including a request to interrupt or modify their operation during the state of potential mutual disturbance.

8. Process unit (3), fit for being part of a system according to claim 4, comprising means for receiving and processing a code initiated by one or more of said remaining process units, including a request to interrupt or modify the process unit's operation during a state of potential mutual disturbance.

9. Software, fit for controlling the process unit according to claim 7, comprising means for generating and outputting said code when the process unit becomes in a state of which either it may disturb other process units or it may be disturbed by other process units.

10. Software according to claim 9, comprising means for generating and outputting a second code when the process unit becomes out of said state of which either it may disturb other process units or it may be disturbed by other process units.

11. Software, fit for controlling the process unit according to claim 8, comprising means for receiving said code and for stopping or modifying the process unit's operation on the code's reception.

12. Software according to claim 11, comprising means for receiving a second code and for continuing or resetting the process unit's operation on the second code's reception.
